(19) Europäisches Patentamt
European Patent Office
Office européen des brevets

(11) EP 3 336 526 B1

(12) EUROPÄISCHE PATENTSCHRIFT

(45) Veröffentlichungstag und Bekanntmachung des Hinweises auf die Patenterteilung:
20.02.2019 Patentblatt 2019/08

(51) Int Cl.:
G01N 23/20016 (2018.01)

(21) Anmeldenummer: 17206955.1

(22) Anmeldetag: 13.12.2017

(54) **RÖNTGENVORRICHTUNG MIT MOTORISCHER DREHMOMENTKOMPENSATION AM DETEKTORKREIS DES GONIOMETERS**

X-RAY DEVICE WITH MOTORIZED TORQUE COMPENSATION ON THE DETECTOR CIRCUIT OF THE GONIOMETER

DISPOSITIF DE RADIOGRAPHIE À COMPENSATION DU COUPLE MOTORISÉ AU CIRCUIT DE DÉTECTION DU GONIOMÈTRE

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: 14.12.2016 DE 102016224940

(43) Veröffentlichungstag der Anmeldung:
20.06.2018 Patentblatt 2018/25

(73) Patentinhaber: Bruker AXS GmbH
76187 Karlsruhe (DE)

(72) Erfinder:
• GRAU, Thorsten
76227 Karlsruhe (DE)
• GEHRLEIN, Wolfgang
76761 Rülzheim (DE)

(74) Vertreter: Kohler Schmid Möbus Patentanwälte
Partnerschaftsgesellschaft mbB
Gropiusplatz 10
70563 Stuttgart (DE)

(56) Entgegenhaltungen:
EP-A1- 1 621 873          WO-A1-91/13344
JP-A- 2001 221 752

**Beschreibung**

Die Erfindung betrifft eine Röntgenvorrichtung, umfassend

- ein Goniometer mit einem Detektorkreis, der um eine Goniometerachse rotierbar ist, insbesondere wobei die Goniometerachse horizontal verläuft,
- einen Stellmotor, der an den Detektorkreis gekoppelt ist, zur motorischen Rotation des Detektorkreises,
- eine Quellenanordnung, die eine Röntgenquelle umfasst,
- eine Detektoranordnung, die am Detektorkreis befestigt ist, wobei die Detektoranordnung einen Röntgendetektor umfasst,
- eine Probenposition für eine zu untersuchende Probe, wobei die Quellenanordnung und die Detektoranordnung auf die Probenposition ausgerichtet sind, insbesondere wobei die Probenposition auf der Goniometerachse liegt,
- und eine Kompensationsvorrichtung, mit der ein durch Gewichtskraft der Detektoranordnung erzeugtes Drehmoment bezüglich der Goniometerachse auf den Detektorkreis zumindest im Wesentlichen kompensiert wird.

Eine solche Röntgenvorrichtung ist aus der EP 1 621 873 B1 bekannt geworden.

Röntgenstrahlung wird in vielfältiger Weise zur Strukturanalyse von Proben, insbesondere kristallinen Proben, eingesetzt. In vielen Messanordnungen, insbesondere für die Röntgenbeugung, wird dabei ein Goniometer verwendet. Mit dem Goniometer ist es möglich, die Ausrichtung einer Röntgenquelle, einer Probe und eines Röntgendetektors relativ zueinander zu verändern, insbesondere um damit gebeugte Röntgenstrahlung von der Probe unter verschiedenen Winkeln zu messen. Üblicherweise verfügt ein Goniometer über einen Detektorkreis, an dem ein Röntgendetektor befestigt ist, und meist auch über einen Quellenkreis, an dem die Röntenquelle befestigt ist. Detektorkreis und Quellenkreis sind motorisch um eine Goniometerachse drehbar ist, auf der meist auch die Probe angeordnet ist. In vielen Fällen ist die Goniometerachse horizontal ausgerichtet.

Ein Röntgendetektor hat eine erhebliche Masse und übt daher ein merkliches Drehmoment bezüglich der Goniometerachse aus. Wird die Drehstellung des Detektorkreises während einer Röntgenmessung mit einem Stellmotor eigenstellt, so muss der Stellmotor dieses Drehmoment kompensieren, um die Drehstellung des Detektorkreises zu halten. Die dafür erforderlichen Kräfte erhöhen den Verschleiß am Goniometer und am Stellmotor, und verringern auch die Präzision bei der Einstellung der gewünschten Drehstellung. Entsprechendes gilt für den Quellenkreis.

Aus der EP 1 621 873 B1 ist es bekannt geworden, bei einem Goniometer einer XRD-Apparatur am Detektorkreis ein Gegengewicht zum Röntgendetektor und am Quellenkreis ein Gegengewicht zur Röntgenquelle und quellseitigen Optik anzuordnen. Die Gegengewichte sollen die Kräfte auf die rotierenden Komponenten des Goniometers minimieren, die ansonsten die Drehpräzision verringern und übermäßigen Verschleiß verursachen würden.

Mit den Gegengewichten kann die mechanische Belastung auf ein Gonimeter zwar verringert werden, jedoch ist eine Justageposition eines Gegengewichts immer nur für eine bestimmte Position des Röntgendetektors bzw. der Röntgenquelle passend. Wird beispielsweise die Position des Röntgendetektors relativ zur Goniometerachse verändert, um die Auflösung einer Röntgenbeugungsmessung zu verändern, muss grundsätzlich auch das Gegengewicht neu justiert werden. Die Justage der Gegengewichte ist schwierig und zeitaufwendig, und birgt zudem auch eine gewisse Verletzungsgefahr für den ausführenden Monteur.

Aus der EP 1 462 795 B1 ist ein Röntgendiffraktometer bekannt, bei dem am Detektorkreis des Goniometers ein rotierbarer Detektorarm befestigt ist, so dass eine Verstellung des Röntgendetektors um zwei Winkel (Gamma und Theta) möglich ist.

In der JP 2001 221752 A ist eine Röntgenfluoreszenz-Anordnung mit einem um einen Winkel Theta verstellbaren Detektorarm beschrieben. Die Drehposition des Detektorarms wird mit einem Hauptmotor eingestellt, und mit einem Hilfsmotor wird ein Spiel in der Drehposition beseitigt.

Aufgabe der Erfindung

Der Erfindung liegt die Aufgabe zugrunde, eine Röntgenvorrichtung bereitzustellen, mit der eine Kompensation von Drehmomenten auf den Detektorkreis des Goniometers bei einer veränderlichen Position der Detektoranordnung vereinfacht ist, insbesondere so dass auch eine Kompensation von Drehmomenten bei einer während einer laufenden Röntgenmessung veränderlichen Position möglich ist.

Kurze Beschreibung der Erfindung

Diese Aufgabe wird auf überraschend einfache und wirkungsvolle Weise gelöst durch eine Röntgenvorrichtung der eingangs genannten Art, die dadurch gekennzeichnet ist,
dass die Kompensationsvorrichtung umfasst

- einen Kompensationsmotor, der ebenfalls an den Detektorkreis gekoppelt ist, zur Aufbringung eines Drehmoment bezüglich der Goniometerachse auf den Detektorkreis, sowie
- eine Steuereinrichtung für den Kompensationsmotor, die dazu ausgebildet ist, in Abhängigkeit von einer momentanen Position der Detektoranordnung den Kompensationsmotor so anzusteuern, dass das vom Kompensationsmotor aufgebrachte Drehmoment zumindest im Wesentlichen gegengleich ist einem durch Gewichtskraft des Detektorkreises einschließlich der Detektoranordnung erzeugten Drehmoment bezüglich der Goniometerachse.

Die Erfindung schlägt vor, am Detektorkreis mit zwei Motoren, nämlich dem Stellmotor und einem Kompensationsmotor, anzugreifen. Mit dem Stellmotor wird der Detektorkreis auf eine jeweils gewünschte Drehposition gebracht und dort gehalten. Mit dem Kompensationsmotor wird am Detektorkreis ein zusätzliches Drehmoment aufgebracht, um das durch Gewichtskraft erzeugte Drehmoment der Detektoranordnung (und ggf. weiterer am Detektorkreis befestigter Teile), soweit es nicht durch andere Maßnahmen wie Gegengewichte bereits kompensiert ist, zu kompensieren.

Der Kompensationsmotor stellt also sicher, dass der Detektorkreis näherungsweise drehmomentfrei ist, wenn der Stellmotor im Rahmen einer Röntgenmessung (typischerweise Beugungsmessung) eine Drehposition des Detektorkreises anfahren oder halten will. Dadurch wird der Verschleiß am Stellmotor reduziert. Ebenso wird die Einstellgenauigkeit des Stellmotors verbessert, da elastischer Verzug reduziert ist.

Die Steuereinrichtung bestimmt ein geeignetes Moment (bzw. einen zugehörigen Wert einer Steuergröße des Kompensationsmotors wie beispielsweise eines Betriebsstroms) für den Kompensationsmotor aus der der Steuereinrichtung bekannten derzeitigen Position der Detektoranordnung.

Die Position der Detektoranordnung wird durch eine oder mehrere Positionsvariablen beschrieben. Im Rahmen der Bestimmung des geeigneten Moments kann mittels der Positionsvariable(n) eine Berechnung erfolgen, oder auch eine zuvor hinterlegte Wertetabelle (ggf. auch eine Wertematrix) oder Kennlinie (ggf. auch ein Kennlinienfeld) ausgelesen bzw. angewandt werden. Meist steuert die Steuereinrichtung auch den Stellmotor (und ggf. einen oder mehrere weitere Stellmotoren) für die Röntgenmessung an, so dass die Steuereinrichtung die Position der Detektoranordnung zumindest teilweise aus ihren eigenen Steuerbefehlen für die Detektoranordnung kennt. Soweit erforderlich, können auch ein oder mehrere Sensoren zur Bestimmung der Position bzw. Positionsvariablen der Detektoranordnung vorgesehen sein. Typische Positionsvariablen der Detektoranordnung, die im Rahmen der Bestimmung des geeigneten Moments berücksichtigt werden, sind der Winkel $\Theta$ (Theta, Drehposition bezüglich der Goniometerachse), der Winkel $\Gamma$ (Gamma, Drehposition bezüglich einer koplanaren Achse) und/oder ein Abstand AB gegenüber der Probenposition. Positionsvariablen der Detektoranordnung beziehen sich typischerweise auf einen Detektionsort für die Röntgenstrahlung, etwa die Einlassöffnung des Röntgendetektors; alternativ können sie sich auch beispielsweise auf den Massenschwerpunkt der Detektoranordnung beziehen. Die Information über die Position der Detektoranordnung umfasst ggf. auch Informationen über eine Einstellung einer Hilfsmechanik, mit der die Detektoranordnung bzw. der Röntgendetektor ausgerichtet wird.

Grundsätzlich ergibt sich das geeignete Moment aus dem horizontalen Abstand, des Massenschwerpunkts des Detektorkreises (einschließlich daran befestigter Teile, insbesondere der Detektoranordnung und ggf. Gegengewichten) von der Goniometerachse, der Masse des Detektorkreises (einschließlich daran befestigter Teile) und dem Ortsfaktor (Erdbeschleunigung). Der Ort des Schwerpunkts des (gesamten) Detektorkreises ist eine Funktion der derzeitigen Position der Detektoranordnung, und daher auch (bei im Übrigen bekannt aufgebautem Detektorkreis einschließlich daran befestigter Teile) bestimmbar bzw. für die Steuerung berücksichtigbar. Es ist allerdings auch möglich, zu jeweiligen Positionen der Detektoranordnung gehörende, geeignete Momente experimentell zu ermitteln und abzuspeichern.

Im Rahmen der Erfindung kann eine Steuerung des Kompensationsmotors über Näherungen erfolgen, ohne den Ort des Schwerpunkts des (gesamten) Detektorkreises exakt zu bestimmen, was die Steuerung vereinfacht und bereits eine sehr gute Drehmomentkompensation ermöglicht. Eine nützliche Näherung ist beispielsweise, den Massenschwerpunkt der Detektoranordnung am Detektionsort (Eingangsöffnung des Röntgendetektors) anzunehmen, so dass die für die Röntgenmessung genutzte Variablen (etwa $\Theta$, $\Gamma$ und AB), die die Position des Detektionsorts beschreiben, so verwendet werden, also ob sie die Position des Massenschwerpunkts der Detektoranordnung beschreiben, der für das Drehmoment durch Gewichtskraft eigentlich relevant ist.

In der Regel können mit der Erfindung durch Gewichtskraft des (gesamten) Detektorkreises bedingte Drehmomente bezüglich der Goniometerachse betragsmäßig um wenigstens 80%, und meist sogar zu wenigstens 95%, reduziert werden. Typischerweise erfolgt die Kompensation so, dass der Stellmotor in einem Sollintervall von verbleibendem Drehmoment arbeiten kann, in welchem der Stellmotor noch keinen merklichen Einstellungsfehler aufweist ("Plateaubereich"). Der Kompensationsmotor ist grundsätzlich ständig während der Nutzung der Röntgenvorrichtung bzw. des Goniometers im Betrieb.

Bevorzugte Ausführungsformen der Erfindung

Eine vorteilhafte Ausführungsform der Röntgenvorrichtung sieht vor, dass die Detektoranordnung verschwenkbar um eine koplanare Achse am Detektorkreis befestigt ist, wobei die koplanare Achse senkrecht zur Goniometerachse verläuft und die Gonimeterachse an der Probenposition schneidet. Eine Verschwenkung des Röntgendetektors um die koplanare Achse (Winkel Γ) wird häufig bei Röntgenbeugungsmessungen von Proben verwendet, um einen vermessbaren Raumwinkelbereich zu vergrößern, und geht mit einer erheblichen Veränderung des Drehmoments am Detektorkreis einher, so dass die Berücksichtigung dieser Verschwenkung im Rahmen der Erfindung für eine besonders starke Entlastung des Goniometers und des Stellmotors sorgt. Im Rahmen der Erfindung können auch andere oder weitere Freiheitsgrade (Verstellmöglichkeiten) der Detektoranordnung berücksichtigt werden, etwa eine Drehung des Röntgendetektors um die Strahlachse. Bevorzugt werden im Rahmen der Erfindung wenigstens zwei Freiheitsgrade der Detektoranordnung berücksichtigt.

Bei einer bevorzugten Weiterbildung dieser Ausführungsform ist vorgesehen, dass am Detektorkreis ein vorderer Ausleger-Teil fixiert ist, dass am vorderen Ausleger-Teil ein hinterer Ausleger-Teil verschwenkbar um die koplanare Achse gelagert ist, dass am hinteren Ausleger-Teil die Detektoranordnung befestigt ist, und dass ein erster weiterer Stellmotor zur motorischen Rotation des hinteren Ausleger-Teils vorgesehen ist. Dieser Aufbau für die Verschwenkung der Detektoranordnung um die koplanare Achse ist besonders einfach.

Vorteilhaft ist auch eine Ausführungsform, bei der die Detektoranordnung über ein Führungssystem am Detektorkreis befestigt ist, so dass die Detektoranordnung mittels des Führungssystems entlang einer Verfahrachse, die die Probenposition schneidet, auf die Probenposition zu oder von der Probenposition weg verfahren werden kann, insbesondere senkrecht zur Goniometerachse verfahren werden kann, und an verschiedenen Verfahrpositionen arretiert werden kann. Durch Verfahren der Detektoranordnung entlang der Verfahrachse (Abstand AB) kann die räumliche Auflösung einer Röntgenmessung (bei gleichem Röntgendetektor) verändert werden. Das Verfahren der Detektoranordnung geht ebenfalls mit einer erheblichen Veränderung des Drehmoments am Detektorkreis einher, so dass die Berücksichtigung dieser Verschwenkung im Rahmen der Erfindung für eine besonders starke Entlastung des Goniometers und des Stellmotors sorgt. Falls gewünscht, kann ein weiterer Stellmotor vorgesehen sein, mit dem die Detektoranordnung auf dem Führungssystem verfahrbar ist. Ebenso ist es möglich, einen Sensor zur Bestimmung der Verfahrposition vorzusehen.

Vorteilhaft ist eine Ausführungsform, die vorsieht, dass die Quellenanordnung auf einem Quellenkreis des Goniometers befestigt ist, der ebenfalls um die Goniometerachse rotierbar ist, und dass der Stellmotor oder ein zweiter weiterer Stellmotor an den Quellenkreis gekoppelt ist, zur motorischen Rotation des Quellenkreises. Durch den rotierbaren Quellenkreis kann die relative Ausrichtung von Quellenanordnung und Detektoranordnung während einer Messung verändert werden, ohne die Probe drehen zu müssen. Dies ist etwa für flüssige Proben nützlich. Zur Drehmomentkompensation am Quellenkreis sind meist ein oder mehrere Gegengewichte am Quellenkreis befestigt, bezüglich der Goniometerachse im Wesentlichen gegenüberliegend zur Quellenanordnung. Alternativ oder zusätzlich kann auch am Quellenkreis ein weiterer Kompensationsmotor analog zum Detektorkreis angekoppelt sein.

Bei einer bevorzugten Ausführungsform umfasst die Kompensationsvorrichtung weiterhin ein oder mehrere Gegengewichte, die am Detektorkreis befestigt sind, und bezüglich der Goniometerachse der Detektoranordnung im Wesentlichen gegenüberliegen. Dadurch kann eine Entlastung des Kompensationsmotors erreicht werden. Für die Bestimmung des geeigneten Moments für den Kompensationsmotor (insbesondere für eine Bestimmung des Massenschwerpunkts und der Gesamtmasse des Detektorkreises) müssen das oder die Gegengewichte berücksichtigt werden. Die Gegengewichte können einen nur mit der Drehung um die Goniometerachse veränderlichen Teil eines zu kompensierenden Drehmoments übernehmen; der verbleibende, (auch) anderweitig veränderliche Teil wird mit dem Kompensationsmotor kompensiert.

Alternativ kann bei einer Ausführungsform vorgesehen sein, dass die Kompensationsvorrichtung ohne Gegengewichte ausgebildet ist. Dadurch wird die Röntgenvorrichtung insgesamt leichter. Eine gegebenenfalls schwierige oder gefährliche Handhabung von Gegengewichten entfällt ganz.

Bei einer bevorzugten Ausführungsform ist vorgesehen, dass der Kompensationsmotor über einen Zahnriemen eine Welle antreibt, und die Welle mit einem Zahnritzel in eine Innenverzahnung des Detektionskreises eingreift. Dieser Aufbau ist besonders einfach und zuverlässig. Alternativ sind auch andere, insbesondere zahnriemenlose Kopplungen möglich, etwa ein Direktantrieb.

Vorteilhaft ist auch eine Ausführungsform, bei der der Kompensationsmotor über ein untersetzendes Getriebe an den Detektionskreis angekoppelt ist, insbesondere mit einem Untersetzungsverhältnis von 40:1 oder höher. Durch die Untersetzung können auch vergleichsweise große Kräfte mit einem kleinen Motor mit guter Genauigkeit auf den Detektorkreis aufgebracht werden. In der Praxis werden meist Untersetzungen von 50:1 oder höher, insbesondere ca. 100:1 gewählt.

Bevorzugt ist eine Ausführungsform, bei der der Kompensationsmotor als ein Gleichstrommotor, insbesondere ein bürstenloser Gleichstrommotor, ausgebildet ist. Über den Betriebsstrom als Steuergröße (oder Messgröße) kann ein zu erzeugendes Moment (oder erzeugtes Moment) leicht direkt eingestellt (oder gemessen) werden. Alternativ kommen beispielsweise auch hydraulische oder pneumatische Motorsysteme in Betracht.

In den Rahmen der vorliegenden Erfindung fällt auch ein Verfahren zum Betrieb einer Röntgenvorrichtung, insbesondere einer oben beschriebenen, erfindungsgemäßen Röntgenvorrichtung,
wobei die Röntgenvorrichtung umfasst

- ein Goniometer mit einem Detektorkreis, der um eine Goniometerachse rotierbar ist, insbesondere wobei die Goniometerachse horizontal verläuft,
- einen Stellmotor, der an den Detektorkreis gekoppelt ist, zur motorischen Rotation des Detektorkreises,
- eine Quellenanordnung, die eine Röntgenquelle umfasst,
- eine Detektoranordnung, die am Detektorkreis befestigt ist, wobei die Detektoranordnung einen Röntgendetektor umfasst,
- eine Probenposition für eine zu untersuchende Probe, wobei die Quellenanordnung und die Detektoranordnung auf die Probenposition ausgerichtet sind, insbesondere wobei die Probenposition auf der Goniometerachse liegt,
- einen Kompensationsmotor, der ebenfalls an den Detektorkreis gekoppelt ist, zur Aufbringung eines Drehmoments bezüglich der Goniometerachse auf den Detektorkreis, sowie
- eine Steuereinrichtung für den Kompensationsmotor,

wobei die Steuereinrichtung den Kompensationsmotor in Abhängigkeit von einer momentanen Position der Detektoranordnung so ansteuert, dass das vom Kompensationsmotor aufgebrachte Drehmoment zumindest im Wesentlichen gegengleich ist einem durch Gewichtskraft des Detektorkreises einschließlich der Detektoranordnung erzeugten Drehmoment bezüglich der Goniometerachse. Das durch die Gewichtskraft des Detektorkreises (einschließlich daran befestigter Teile, insbesondere Detektoranordnung und ggf. Gegengewichte) erzeugte Drehmoment wird durch den Kompensationsmotor kompensiert, so dass der Detektionskreis für den Stellmotor stets im Wesentlichen drehmomentfrei ist. Veränderungen des zu kompensierenden Drehmoments, die sich aus einer veränderlichen Position der Detektoranordnung ergeben, werden von der Steuereinrichtung erfasst und bei der Ansteuerung des Kompensationsmotors entsprechend berücksichtigt. Dadurch werden Goniometer und Stellmotor entlastet, was die Einstellpräzision verbessert und den Verschleiß verringert.

Bei einer bevorzugten Variante des erfindungsgemäßen Verfahrens berücksichtigt die Steuereinrichtung für die Steuerung des Kompensationsmotor eine Positionsvariable $\Theta$ der Detektoranordnung, mit $\Theta$: Winkelposition der Detektoranordnung bezüglich der Goniometerachse, gemessen gegenüber einer ersten Referenzebene, die die Goniometerachse enthält, insbesondere wobei die erste Referenzebene horizontal ist. Der Winkel $\Theta$ (Theta) wird für viele Röntgenbeugungsexperimente verändert bzw. erfasst, und hat einen großen Einfluss auf das Drehmoment auf den Detektorkreis. Man beachte, dass die Detektoranordnung meist mit $2\Theta$ gegenüber der Röntgenstrahl-Einfallsrichtung geneigt ist.

Vorteilhaft ist eine Weiterentwicklung dieser Variante, die vorsieht, dass die erste Referenzebene horizontal ist, und dass die Steuerung des Kompensationsmotors so erfolgt, dass dieser ein Drehmoment $M_{KM}$ erzeugt, welches einen Beitrag B1 näherungsweise proportional zu $\cos\Theta$ hat. Dadurch wird eine Verkürzung des Hebelarms der Detektoranordnung beim Verschwenken um die Goniometerachse näherungsweise (meist auf wenigstens 20%, bevorzugt auf wenigstens 5% genau) berücksichtigt. Im Allgemeinen weist $M_{KM}$ auch ein konstantes Offset-Moment $C_0$ auf (etwa um Gegengewichte oder Reibung zu berücksichtigen).

Bevorzugt ist auch eine Variante, bei der die Steuereinrichtung für die Steuerung des Kompensationsmotors eine Positionsvariable $\Gamma$ der Detektoranordnung berücksichtigt, mit $\Gamma$: Winkelposition der Detektoranordnung bezüglich einer koplanaren Achse, gemessen gegenüber einer zweiten Referenzebene, die die koplanare Achse enthält, insbesondere wobei die zweite Referenzebene senkrecht zur Goniometerachse verläuft, und wobei die koplanare Achse senkrecht zur Goniometerachse verläuft und die Gonimeterachse an der Probenposition schneidet. Der Winkel $\Gamma$ (Gamma) wird ebenfalls für viele Röntgenbeugungsexperimente verändert bzw. erfasst, und hat einen großen Einfluss auf das Drehmoment auf den Detektorkreis.

Bei einer vorteilhaften Weiterentwicklung dieser Variante ist vorgesehen, dass die Steuerung des Kompensationsmotors so erfolgt, dass dieser ein Drehmoment $M_{KM}$ erzeugt, welches einen Beitrag B2 näherungsweise proportional zu $\cos\Gamma$ hat. Dadurch wird eine Verkürzung des Hebelarms der Detektoranordnung beim Verschwenken um die koplanare Achse näherungsweise (meist auf wenigstens 20%, bevorzugt auf wenigstens 5% genau) berücksichtigt. Typischerweise ist der Beitrag B2 gleichzeitig näherungsweise proportional zu $\cos\Theta$, also B2 $\sim \cos\Gamma * \cos\Theta$.

Ebenfalls bevorzugt ist eine Variante, bei der die Steuereinrichtung für die Steuerung des Kompensationsmotors eine Positionsvariable AB der Detektoranordnung berücksichtigt, mit AB: Abstand der Detektoranordnung von der Probenposition. Der Abstand AB wird oft verändert, um die räumliche Auflösung der Röntgenvorrichtung einzustellen, und hat einen großen Einfluss auf das Drehmoment auf den Detektorkreis.

Vorteilhaft ist eine Weiterentwicklung dieser Ausführungsform, die vorsieht, dass die Steuerung des Kompensationsmotors so erfolgt, dass dieser ein Drehmoment $M_{KM}$ erzeugt, welches einen Beitrag B3 näherungsweise proportional zu AB hat. Dadurch wird eine Verkürzung oder Verlängerung des Hebelarms der Detektoranordnung beim Verfahren der Detektoranordnung auf die Probenposition zu oder von der Probenposition weg, etwa mittels eines oben beschriebenen Führungssystems, näherungsweise (meist auf wenigstens 20%, bevorzugt auf wenigstens 5% genau) berücksichtigt. Typischerweise ist der Beitrag B3 gleichzeitig proportional zu $\cos\Theta$, also B3 ~ AB * $\cos\Theta$, oder auch B3 ~ AB * $\cos\Theta$ * $\cos\Gamma$.

Bevorzugt ist weiterhin eine Variante, die vorsieht, dass in der Steuereinrichtung eine Wertetabelle, eine Wertematrix, eine Kennlinie oder ein Kennlinienfeld für ein vom Kompensationsmotor einzustellendes Moment $M_{KM}$ oder einen an den Kompensationsmotor anzulegenden Wert einer Steuergröße in Abhängigkeit von einer oder mehreren Positionsvariablen der Detektoranordnung hinterlegt ist,

und dass die Steuereinrichtung während des Betriebs der Röntgenvorrichtung die Wertetabelle, die Wertematrix, die Kennlinie oder das Kennlinienfeld anwendet oder ausliest, um das einzustellende Moment $M_{KM}$ oder den Wert der Steuergröße zu bestimmen. Aus der oder den Positionsvariablen kann mit Hilfe der Wertetabelle, der Wertematrix, der Kennlinie oder dem Kennlinienfeld auf einfache und schnelle Weise das einzustellende Moment oder der anzulegende Wert der Steuergröße bestimmt werden. Es sind keine In-Situ-Überlegungen zur Position des Schwerpunkts des Detektorkreises erforderlich, was die Bestimmung vereinfacht und beschleunigt. Nötigenfalls kann zwischen Werteeinträgen/Kennlinienpositionen interpoliert werden, insbesondere linear interpoliert werden.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Detaillierte Beschreibung der Erfindung und Zeichnung

Die Erfindung ist in der Zeichnung dargestellt und wird anhand von Ausführungsbeispielen näher erläutert. Es zeigen:

Fig. 1     eine schematische Schrägansicht einer ersten Ausführungsform einer erfindungsgemäßen Röntgenvorrichtung, mit einteiligem Ausleger am Detektorkreis;

Fig. 2     eine schematische, isolierte Darstellung von Kompensationsmotor, umsetzendem Getriebe und Detektorkreis der Röntgenvorrichtung von Fig. 1;

Fig. 3     eine schematische, isolierte Darstellung des Goniometers der Röntgenvorrichtung von Fig. 1;

Fig. 4     eine schematische Schrägansicht einer zweiten Ausführungsform einer erfindungsgemäßen Röntgenvorrichtung, mit zweiteiligem Ausleger am Detektorkreis;

Fig. 5     ein Kennlinienfeld für die Ansteuerung der Röntgenvorrichtung von Fig. 4.

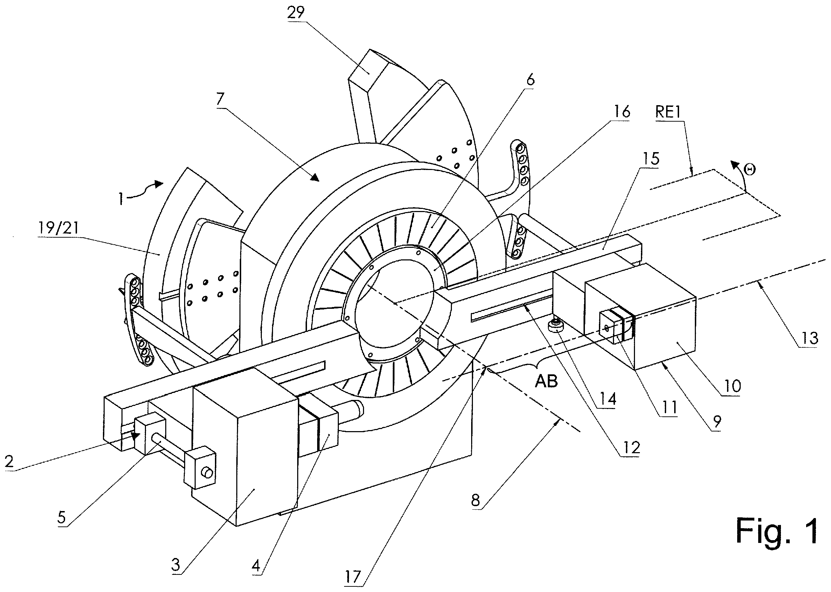

Die **Fig. 1** zeigt in einer ersten Ausführungsform eine erfindungsgemäße Röntgenvorrichtung 1 zur Durchführung eines erfindungsgemäßen Verfahrens.

Die Röntgenvorrichtung 1 umfasst eine Quellenanordnung 2, mit einer Röntgenquelle 3, hier einer Röntgenröhre, vor der diverse röntgenoptische Elemente 4 (hier eine Kombination von Röntgenspiegeln, Blenden und einem Kollimator) angeordnet sind, und mit einer Halterungsmechanik 5. Die Quellenanordnung 2 ist an einem Quellenkreis 6 eines Goniometers 7 angeordnet, mit dem der Quellenkreis 6, und damit auch die Quellenanordnung 2, um eine hier horizontale Goniometerachse 8 motorisch rotiert werden kann.

Die Röntgenvorrichtung 1 umfasst weiterhin eine Detektoranordnung 9, mit einem Röntgendetektor 10, vor dem diverse röntgenoptische Elemente 11 (hier eine Kombination von Blenden) angeordnet sind. Die Detektoranordnung 9 ist auf einem Führungssystem 12 ("Track") verfahrbar, so dass die Detektoranordnung 9 (bzw. ein zugehöriges Detektorfenster, hier verdeckt) entlang einer Verfahrachse 13 verfahrbar ist. Die Verfahrposition der Detektoranordnung 9 ist hier manuell einstellbar und kann mittels Fixierschrauben 14 an beliebigen Positionen arretiert werden. Das Führungssystem 12 ist hier an einem einteiligen Ausleger 15 ausgebildet, der an einem Detektorkreis 16 des Goniometers 7 befestigt ist. Mit dem Goniometer 7 kann der Detektorkreis 16, und damit auch die an ihm angeordnete Detektoranordnung 9, um die Goniometerachse 8 motorisch rotiert werden.

Die Quellenanordnung 2 bzw. ein von ihr erzeugter Röntgenstrahl (nicht dargestellt) und die Detektoranordnung 9 sind auf eine Probenposition 17 ausgerichtet, die hier auf der Goniometerachse 8 liegt. Man beachte, dass die Verfahrachse 13 die Probenposition 17 schneidet. Für die röntgendiffraktometerische Untersuchung einer Probe an der Probenposition 17 werden die Quellenanordnung 2 und die Detektoranordnung 9 mittels des Goniometers 7 um die Goniometerachse 8, und damit um die Probenposition 17, verschwenkt.

Die Detektoranordnung 9 und die weiteren, am Detektorkreis 16 befestigten Teile haben eine erhebliche Masse, so dass durch die resultierende Gewichtskraft auf den Detektorkreis 16 ein Drehmoment ausgeübt wird. Anders gesagt hat der Detektorkreis 16 insgesamt (also einschließlich der an ihm befestigten Teile wie Ausleger 15 und Detektoranordnung 9) einen Massenschwerpunkt, der horizontal von der Goniometerachse 8 beabstandet ist und dadurch den Detektorkreis 16 zu drehen sucht.

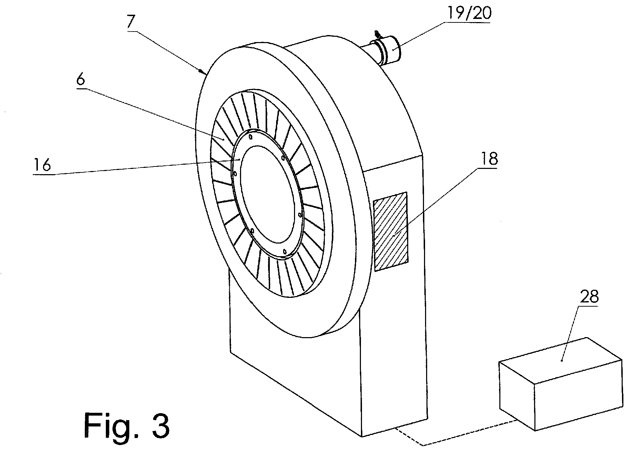

Wie in **Fig. 3** angedeutet, verfügt das Goniometer 7 über einen Stellmotor 18, mit dem der Detektorkreis 16 auf eine gewünschte Drehposition gedreht und auf dieser gehalten wird.

Um zu vermeiden, dass der Stellmotor 18 ständig gegen die Gewichtskraft der Detektoranordnung (und anderer exzentrischer Teile) arbeiten muss, verfügt die Röntgenvorrichtung über eine Kompensationsvorrichtung 19. Gemäß der Erfindung umfasst die Kompensationsvorrichtung 19 einen Kompensationsmotor 20, der an den Detektorkreis 16 gekoppelt ist. Der Kompensationsmotor 20 ist hier als ein bürstenloser Gleichstrommotor ausgeführt.

Wie wiederum aus Fig. 1 ersichtlich ist, verfügt die Kompensationsvorrichtung 19 hier weiterhin über Gegengewichte 21, die (bezüglich der Goniometerachse 8) gegenüber der Detektoranordnung 9 am Detektorkreis 16 befestigt sind. Man beachte, dass in Fig. 1 der Kompensationsmotor 20 von einem oberen Teil der Goniometerabdeckung verdeckt ist.

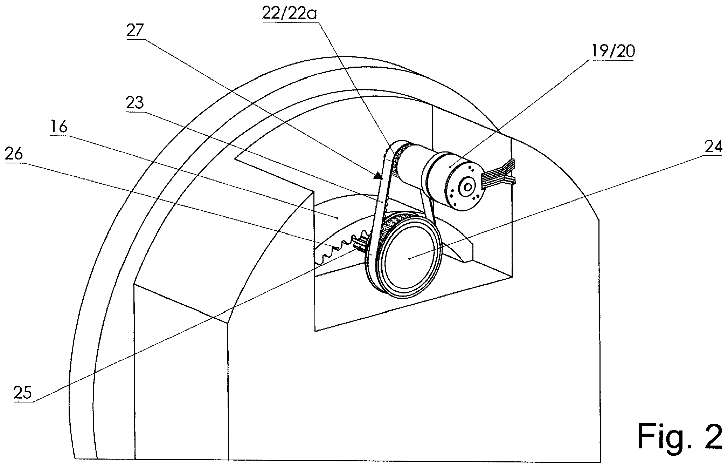

Wie in **Fig. 2** ersichtlich, verfügt der Kompensationsmotor 20 hier über eine Motorwelle 22, die eine Außenverzahnung 22a aufweist. Ein Zahnriemen 23 (dessen Verzahnung nur teilweise in Fig. 2 dargestellt ist) koppelt die Motorwelle 22 mit einer Welle 24, an der ein Zahnritzel 25 ausgebildet ist. Der Zahnritzel 25 greift in eine Innenverzahnung 26 (nur teilweise in Fig. 2 dargestellt) am Detektorkreis 16 ein. Das insbesondere durch die Motorwelle 22 mit Außenverzahnung 22a, die Welle 24 mit Zahnritzel 25 und die Innenverzahnung 26 ausgebildete Getriebe 27 überträgt die Drehung der Motorwelle 22 stark untersetzt auf den Detektorkreis 16, hier mit einem Untersetzungsverhältnis von ca. 50:1 (d.h. eine Umdrehung der Motorwelle 22 entspricht 1/50 Umdrehung des Detektorkreises 16).

Man beachte, dass der Kompensationsmotor 20 unabhängig vom Stellmotor ist. Der Kompensationsmotor 20 dient dazu, den Detektorkreis 16 für den Stellmotor im Wesentlichen drehmomentfrei zu stellen.

Bezugnehmend auf die Fig. 1 kann mit den Gegengewichten 21 ein Drehmomentbeitrag des Auslegers 15 (und anderer nicht verschieblicher Teile am Detektorkreis 16) gut kompensiert werden. Eine Drehung des Detektorkreises 16 um die Goniometerachse 8 (vgl. Winkel $\Theta$, Theta) verändert den horizontalen Abstand der Gegengewichte 21 und des Auslegers 15 zur Goniometerachse 8 gleichermaßen. Hingegen hängt der Drehmomentbeitrag durch die Detektoranordnung 9 auch von der Verschiebeposition entlang der Verfahrachse 13 (vgl. Abstand AB zur Probenposition 17) ab. Daher kann der Drehmomentbeitrag der Detektoranordnung 9 nicht mit fest installierten Gegengewichten 21 kompensiert werden. Der Drehmomentbeitrag der Detektoranordnung 9, und gegebenenfalls auch weitere unkompensierte Drehmomentbeiträge der weiteren, am Detektorkreis 16 installierten Teile, wird mit dem Kompensationsmotor ausgeglichen.

Wie in Fig. 3 schematisch dargestellt ist, verfügt die Röntgenvorrichtung über eine elektronische Steuereinrichtung 28, die an das Goniometer 7 angeschlossen ist. Die Steuereinrichtung 28 kann beispielsweise mittels eines Desktopcomputers realisiert sein. Die Steuereinrichtung 28 gibt zum einen im Rahmen der programmierten Röntgenmessung Steuerbefehle an den Stellmotor 18, um die Drehposition des Detektorkreises 16 (und auch des Quellenkreises 6) einzustellen. Daher kennt die Steuereinrichtung 28 die momentane Drehposition (Winkelposition $\Theta$, Theta, hier gemessen gegen eine erste, horizontale Referenzebene RE1, die die Goniometerachse 8 enthält) des Detektorkreises 16 bzw. der Detektoranordnung 9, wobei $\Theta$ (Theta) in der hier gezeigten Position ca. 0° beträgt. Weiterhin wird der Steuereinrichtung 28 die Verschiebeposition (Abstand AB zwischen Probenposition 17/Goniometerachse 8 und dem Detektorfenster der Detektoranordnung 9) der Detektoranordnung 9 bekannt gegeben (beispielsweise durch eine manuelle Eingabe nach manuellem Ablesen der Position mit bloßem Auge, oder auch durch Auslesen eines Positionssensors, nicht näher dargestellt). Mit diesen Positionsvariablen, bei im übrigem gegebenen Aufbau der Röntgenvorrichtung, kann die Steuereinrichtung 28 ein geeignetes Kompensationsmoment bzw. einen entsprechenden Steuerstrom für den Kompensationsmotor 20 ermitteln und an den Kompensationsmotor 20 anlegen.

In der gezeigten Ausführungsform, vgl. Fig. 1, verfügt auch der Quellenkreis 6 über Gegengewichte 29, die der Quellenanordnung 2 (bezogen auf die Goniometerachse 8) gegenüberliegen. Da die Quellenanordnung 2 in der Regel nur gemeinsam mit den Gegengewichten 29 um die Goniometerachse 8 rotiert und im Übrigen nicht verstellt wird, kann mit fest am Quellenkreis 6 installierten Gegengewichten 29 hier eine gute Drehmomentkompensation erreicht werden.

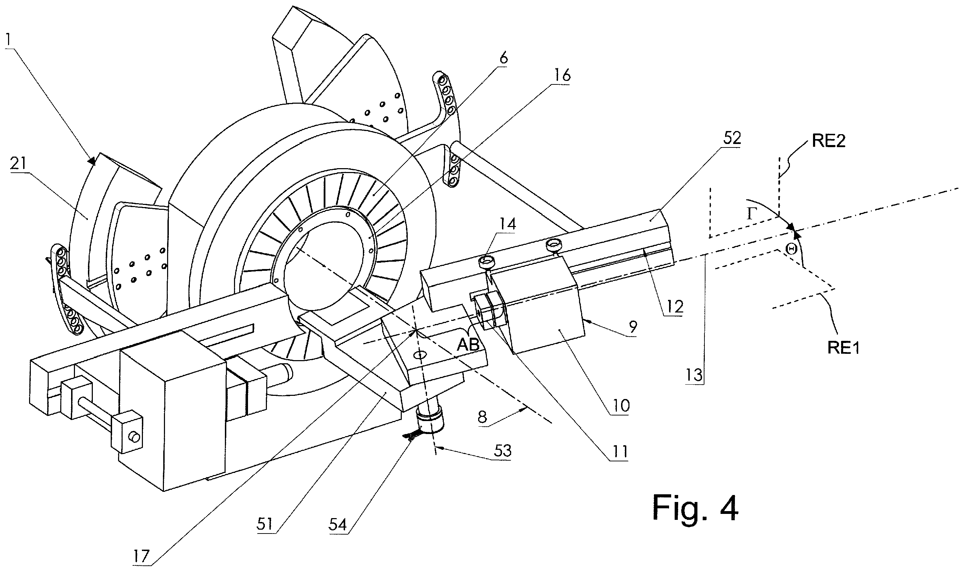

Die **Fig. 4** zeigt eine zweite Ausführungsform einer erfindungsgemäßen Röntgenvorrichtung 1 zur Verwendung in einem erfindungsgemäßen Verfahren, ähnlich der Röntgenvorrichtung von Fig. 1. Es werden daher vor allem die wesentlichen Unterschiede zur Ausführungsform von Fig. 1 erläutert.

Am Detektorkreis 16 ist hier ein vorderer, erster Ausleger-Teil 51 befestigt, an den drehbar um eine koplanare Achse 53 ein hinterer, zweiter Ausleger-Teil 52 angelenkt ist. Die Drehstellung (vgl. Winkel $\Gamma$, Gamma) bezüglich der koplanaren Achse 53 kann über einen ersten weiteren Stellmotor 54 eingestellt werden; dieser wird von der elektronischen Steuereinrichtung (nicht dargestellt) angesteuert. Die koplanare Achse 53 verläuft senkrecht zur Goniometerachse 8 und schneidet die Goniometerachse 8 an der Probenposition 17. Auf dem zweiten Ausleger-Teil 52 ist das Führungssystem 12 angeordnet, mit dem die Detektoranordnung 9 entlang der Verfahrachse 13 verfahren werden kann.

Durch die zusätzliche Verschwenkmöglichkeit der Detektoranordnung 9 um die koplanare Achse 53 (Winkel Γ, Gamma) sind bei einer Röntgenbeugungsmessung zusätzliche Raumwinkelbereiche zugänglich. Eine Drehmomentänderung aufgrund einer Verschwenkung der Detektoranordnung 9 um einen Winkel Γ (Gamma) kann dabei von den Gegengewichten 21 nicht vollständig aufgehoben werden; lediglich der nicht verschwenkende erste Ausleger-Teil 51 kann durch die Gegengewichte 21 kompensiert werden. Daher verfügt auch diese Ausführungsform über einen an den Detektorkreis 16 gekoppelten Kompensationsmotor (in Fig. 4 wiederum durch die den oberen Teil der Goniometerabdeckung verdeckt, vgl. aber z.B. Fig. 3).

Mittels der Positionsvariablen Θ (Theta, Verschwenkung der Detektoranordnung 9 um die Goniometerachse 8, gemessen gegenüber der ersten horizontalen Referenzebene RE1), Γ (Gamma, Verschwenkung der Detektoranordnung 9 um die koplanare Achse 53, gemessen gegenüber einer zweiten Referenzebene RE2, die hier senkrecht zur Goniometerachse 8 liegt und die koplanare Achse 53 enthält) und AB (Abstand Detektorfenster der Detektoranordnung 9 zur Probenposition 17) kann ein für den Kompensationsmotor geeignetes Gegenmoment bestimmt werden. Die momentane Drehposition bezüglich Γ (Gamma), hier gezeigt ca. 20°, ist dabei in der Steuereinrichtung bereits bekannt, da diese über die Steuereinrichtung eingestellt wird. Entsprechendes gilt für die momentane Drehposition bezüglich Θ (Theta), hier gezeigt ca. 10°.

Man beachte, dass bei großen Winkeln Γ (Gamma) über 90° das Vorzeichen des von der Detektorvorrichtung 9 bewirkten Drehmoments auf den Detektorkreis 16 wechselt. Entsprechend ist der Kompensationsmotor für eine bidirektionale Kraftaufbringung ausgebildet.

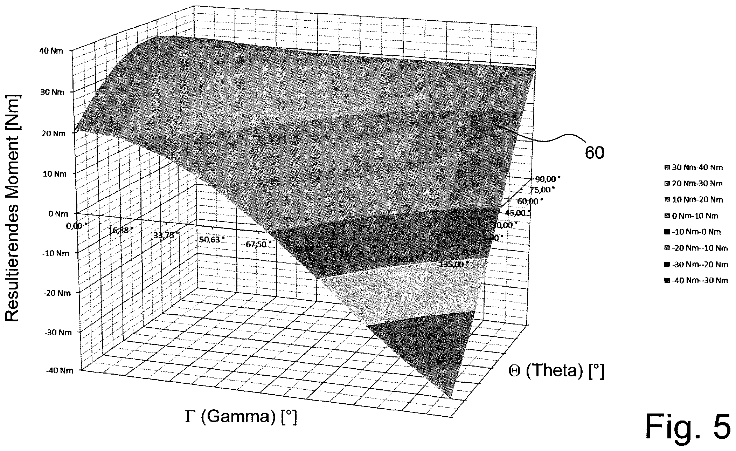

Die **Fig. 5** zeigt ein typisches Kennlinienfeld 60, wie es im Rahmen der Erfindung von einer Steuereinrichtung gemäß der Ausführungsform einer Röntgenvorrichtung von Fig. 4 verwendet werden kann.

Das gezeigte, zweidimensionale Kennlinienfeld 60 gibt an, welches Drehmoment (resultierendes Moment um die Goniometerachse, nach oben aufgetragen) vom Kompensationsmotor kompensiert werden muss, in Abhängigkeit von der Positionsvariable Winkel Γ (Gamma, nach rechts aufgetragen) und der Positionsvariable Winkel Θ (Theta, nach hinten aufgetragen). Zur Kompensation dieses resultierenden Moments muss der Kompensationsmotor das -1 fache davon als einzustellendes Drehmoment $M_{KM}$ an den Detektorkreis anlegen. Bei bekannter Kraftcharakteristik des Kompensationsmotors kann dann mittels des abgelesenen Drehmoments des Kennlinienfelds ein Steuerstrom für den Kompensationsmotor bestimmt und angelegt werden. Das gezeigte Kennlinienfeld 60 gilt hier für einen bestimmten Abstand AB der Detektoranordnung von der Probenposition; für andere Abstände AB können weitere Kennlinienfelder hinterlegt bzw. verwendet werden, oder es wird ein dreidimensionales Kennlinienfeld hinterlegt und verwendet (nicht näher dargestellt).

Das Kennlinienfeld 60 wird am einfachsten experimentell bestimmt, indem das auf die Goniometerachse wirkende Moment (ohne Kompensationsmotor) vorab für die verschiedenen, im Rahmen der vorgesehenen Röntgenmessungen möglichen Positionen der Detektoranordnung vermessen wird. Alternativ kann auch das wirkende Moment berechnet werden, etwa über die Positionen von Massenschwerpunkten und deren horizontale Abstande zur Goniometerachse. Im Allgemeinen treten näherungsweise folgende Abhängigkeiten des wirkenden Moments und der Positionsvariablen auf:

a) Feste Anteile (unabhängig von den Positionsvariablen), etwa bedingt durch Reibung;
b) Anteile proportional zu cosΘ; diese werden durch alle um die Goniometerachse rotierenden Teile, die am Detektorkreis befestigt sind, verursacht;
c) Anteile proportional cosΓ, diese werden durch alle um die koplanare Achse rotierenden Teile, die am Detektorkreis befestigt sind, verursacht;
d) Anteile proportional AB; diese werden durch alle entlang der Verfahrachse verschieblichen Teile, die am Detektorkreis befestigt sind, verursacht.

Man beachte, dass manche Teile, die am Detektorkreis befestigt sind, zu einer oder auch mehreren der obigen Kategorien beitragen können. So verursacht in Fig. 4 der erste Ausleger-Teil 51 einen Beitrag (nur) proportional zu cosΘ, der zweite Ausleger-Teil 52 einen Beitrag proportional zu cosΘ*cosΓ, und die Detektoranordnung 9 einen Beitrag proportional zu AB*cosΘ*cosΓ. Der absolute Beitrag hängt dann weiter von der Masse der jeweiligen Teile ab.

Für die Ausführungsform von Fig. 1 verursacht der Ausleger 15 eine Beitrag (nur) proportional zu cosΘ, und die Detektoranordnung 9 einen Beitrag proportional AB*cosΘ.

Für die Ausführungsform von Fig. 4 ergibt sich näherungsweise ein wie folgt darstellbares Drehmoment $M_{KM}$ für den Kompensationsmotor in Abhängigkeit von den Positionsvariablen:

$$M_{KM} = A0 + A1{*}\cos\Theta + A2{*}\cos\Theta{*}\cos\Gamma + A3{*}AB{*}\cos\Theta{*}\cos\Gamma \qquad (Gl.1)$$

mit A0, A1, A2, A3: durch die Röntgenvorrichtung bedingte Konstanten. Durch Umformung ergibt sich aus Gleichung 1 insbesondere

$$M_{KM} = A0 + B1 \qquad\qquad (Gl.\ 2)$$

$$\text{mit } B1 = [A1 + A2*cos\Gamma + A3*AB*cos\Gamma]*cos\Theta \qquad\qquad (Gl.\ 3)$$

mit B1: Beitrag proportional zu $cos\Theta$.

Auch kann Gleichung 1 umgeformt werden gemäß

$$M_{KM} = A0 + A1*cos\Theta + B2 \qquad\qquad (Gl.\ 4)$$

$$\text{mit } B2 = [A2*cos\Theta + A3*AB*cos\Theta]*cos\Gamma \qquad\qquad (Gl.\ 5)$$

mit B2: Beitrag proportional zu $cos\Gamma$.

Weiterhin kann Gleichung 1 umgeformt werden gemäß

$$M_{KM} = A0 + A1*cos\Theta + A2*cos\Theta*cos\Gamma + B3 \qquad\qquad (Gl.\ 6)$$

$$\text{mit } B3 = [A3*cos\Theta*cos\Gamma]*AB \qquad\qquad (Gl.\ 7)$$

mit B3: Beitrag proportional zu AB. Die im Kennlinienfeld 60 hinterlegten Daten folgen näherungsweise diesen Abhängigkeiten. Man beachte, dass je nach Aufbau der Röntgenvorrichtung auch weniger, mehr oder andere Terme als in Gleichung 1 für $M_{KM}$ niedergelegt auftreten können, wodurch sich auch die Terme in den Beiträgen B1, B2, B3 ändern können.

Alternativ zu einer Bestimmung von $M_{KM}$ über Kennlinienfelder können zum Beispiel die im Modell (vgl. Gleichung 1 im obigen Beispiel) für die Drehmomente auftretenden Konstanten (im obigen Beispiel A0, A1, A2, A3) bestimmt und in der Steuereinrichtung hinterlegt werden, und mit dem Modell und jeweils vorliegenden Positionsparametern das Drehmoment $M_{KM}$ für den Kompensationsmotor berechnet werden.

Bezugszeichenliste

| | |
|---|---|
| 1 | Röntgenvorrichtung |
| 2 | Quellenanordnung |
| 3 | Röntgenquelle |
| 4 | röntgenoptische Elemente (Quellenanordnung) |
| 5 | Halterungsmechanik (Quellenanordnung) |
| 6 | Quellenkreis |
| 7 | Goniometer |
| 8 | Goniometerachse |
| 9 | Detektoranordnung |
| 10 | Röntgendetektor |
| 11 | röntgenoptische Elemente (Detektoranordnung) |
| 12 | Führungssystem |
| 13 | Verfahrachse |
| 14 | Feststellschraube |
| 15 | Ausleger |
| 16 | Detektorkreis |
| 17 | Probenposition |
| 18 | Stellmotor |

| | |
|---|---|
| 19 | Kompensationsvorrichtung |
| 20 | Kompensationsmotor |
| 21 | Gegengewicht (Detektorkreis) |
| 22 | Motorwelle |
| 22a | Außenverzahnung (Motorwelle) |
| 23 | Zahnriemen |
| 24 | Welle |
| 25 | Zahnritzel |
| 26 | Innenverzahnung (Detektorkreis) |
| 27 | Getriebe |
| 28 | Steuereinrichtung |
| 29 | Gegengewicht (Quellenkreis) |
| 51 | vorderer (erster) Ausleger-Teil |
| 52 | hinterer (zweiter) Ausleger-Teil |
| 53 | koplanare Achse |
| 54 | erster weiterer Stellmotor |
| AB | Abstand Probenposition zu Detektoranordnung |
| RE1 | erste Referenzebene |
| RE2 | zweite Referenzebene |
| Γ | Gamma, Verschwenkwinkel um koplanare Achse |
| Θ | Theta, Verschwenkwinkel um Goniometerachse |

**Patentansprüche**

1.  Röntgenvorrichtung (1), umfassend

    - ein Goniometer (7) mit einem Detektorkreis (16), der um eine Goniometerachse (8) rotierbar ist, insbesondere wobei die Goniometerachse (8) horizontal verläuft,
    - einen Stellmotor (18), der an den Detektorkreis (16) gekoppelt ist, zur motorischen Rotation des Detektorkreises (16),
    - eine Quellenanordnung (2), die eine Röntgenquelle (3) umfasst,
    - eine Detektoranordnung (9), die am Detektorkreis (16) befestigt ist, wobei die Detektoranordnung (9) einen Röntgendetektor (10) umfasst,
    - eine Probenposition (17) für eine zu untersuchende Probe, wobei die Quellenanordnung (2) und die Detektoranordnung (9) auf die Probenposition (17) ausgerichtet sind, insbesondere wobei die Probenposition (17) auf der Goniometerachse (8) liegt,
    - und eine Kompensationsvorrichtung (19), mit der ein durch Gewichtskraft der Detektoranordnung (9) erzeugtes Drehmoment bezüglich der Goniometerachse (8) auf den Detektorkreis (16) zumindest im Wesentlichen kompensiert wird,

    **dadurch gekennzeichnet,**
    **dass** die Kompensationsvorrichtung (19) umfasst

    - einen Kompensationsmotor (20), der ebenfalls an den Detektorkreis (16) gekoppelt ist, zur Aufbringung eines Drehmoments bezüglich der Goniometerachse (8) auf den Detektorkreis (16), sowie
    - eine Steuereinrichtung (28) für den Kompensationsmotor (20), die dazu ausgebildet ist, in Abhängigkeit von einer momentanen Position der Detektoranordnung (9) den Kompensationsmotor (20) so anzusteuern, dass das vom Kompensationsmotor (20) aufgebrachte Drehmoment zumindest im Wesentlichen gegengleich ist einem durch Gewichtskraft des Detektorkreises (16) einschließlich der Detektoranordnung (9) erzeugten Drehmoment bezüglich der Goniometerachse (8).

2.  Röntgenvorrichtung (1) nach einem der vorhergehenden Ansprüche, **dadurch gekennzeichnet, dass** die Detektoranordnung (9) verschwenkbar um eine koplanare Achse (53) am Detektorkreis (16) befestigt ist, wobei die koplanare Achse (53) senkrecht zur Goniometerachse (8) verläuft und die Gonimeterachse (8) an der Probenposition (17) schneidet.

3.  Röntgenvorrichtung (1) nach Anspruch 2, **dadurch gekennzeichnet, dass** am Detektorkreis (16) ein vorderer Ausleger-Teil (51) fixiert ist, dass am vorderen Ausleger-Teil (51) ein hinterer Ausleger-Teil (52) verschwenkbar um die koplanare Achse (53) gelagert ist, dass am hinteren Ausleger-Teil (52) die Detektoranordnung (9) befestigt ist, und dass ein erster weiterer Stellmotor (54) zur motorischen Rotation des hinteren Ausleger-Teils (52) vorgesehen ist.

4. Röntgenvorrichtung (1) nach einem der vorhergehenden Ansprüche, **dadurch gekennzeichnet, dass** die Detektoranordnung (9) über ein Führungssystem (12) am Detektorkreis (16) befestigt ist, so dass die Detektoranordnung (9) mittels des Führungssystems (12) entlang einer Verfahrachse (13), die die Probenposition (17) schneidet, auf die Probenposition (17) zu oder von der Probenposition (17) weg verfahren werden kann, insbesondere senkrecht zur Goniometerachse (8) verfahren werden kann, und an verschiedenen Verfahrpositionen arretiert werden kann.

5. Röntgenvorrichtung (1) nach einem der vorhergehenden Ansprüche, **dadurch gekennzeichnet, dass** die Quellenanordnung (2) auf einem Quellenkreis (6) des Goniometers (7) befestigt ist, der ebenfalls um die Goniometerachse (8) rotierbar ist, und dass der Stellmotor (18) oder ein zweiter weiterer Stellmotor an den Quellenkreis (6) gekoppelt ist, zur motorischen Rotation des Quellenkreises (6).

6. Röntgenvorrichtung (1) nach einem der vorhergehenden Ansprüche, **dadurch gekennzeichnet, dass** die Kompensationsvorrichtung (19) ohne Gegengewichte (21) ausgebildet ist.

7. Röntgenvorrichtung (1) nach einem der vorhergehenden Ansprüche, **dadurch gekennzeichnet, dass** der Kompensationsmotor (20) als ein Gleichstrommotor, insbesondere ein bürstenloser Gleichstrommotor, ausgebildet ist.

8. Verfahren zum Betrieb einer Röntgenvorrichtung (1), insbesondere einer Röntgenvorrichtung (1) nach einem der vorhergehenden Ansprüche, wobei die Röntgenvorrichtung (1) umfasst

   - ein Goniometer (7) mit einem Detektorkreis (16), der um eine Goniometerachse (8) rotierbar ist, insbesondere wobei die Goniometerachse (8) horizontal verläuft,
   - einen Stellmotor (18), der an den Detektorkreis (16) gekoppelt ist, zur motorischen Rotation des Detektorkreises (16),
   - eine Quellenanordnung (2), die eine Röntgenquelle (3) umfasst,
   - eine Detektoranordnung (9), die am Detektorkreis (16) befestigt ist, wobei die Detektoranordnung (9) einen Röntgendetektor (10) umfasst,
   - eine Probenposition (17) für eine zu untersuchende Probe, wobei die Quellenanordnung (2) und die Detektoranordnung (9) auf die Probenposition (17) ausgerichtet sind, insbesondere wobei die Probenposition (17) auf der Goniometerachse (8) liegt,
   - einen Kompensationsmotor (20), der ebenfalls an den Detektorkreis (16) gekoppelt ist, zur Aufbringung eines Drehmoments bezüglich der Goniometerachse (8) auf den Detektorkreis (16), sowie
   - eine Steuereinrichtung (28) für den Kompensationsmotor (20),

   wobei die Steuereinrichtung (28) den Kompensationsmotor (20) in Abhängigkeit von einer momentanen Position der Detektoranordnung (9) so ansteuert, dass das vom Kompensationsmotor (20) aufgebrachte Drehmoment zumindest im Wesentlichen gegengleich ist einem durch Gewichtskraft des Detektorkreises (16) einschließlich der Detektoranordnung (9) erzeugten Drehmoment bezüglich der Goniometerachse (8).

9. Verfahren nach Anspruch 8, **dadurch gekennzeichnet, dass** die Steuereinrichtung (28) für die Steuerung des Kompensationsmotors (20) eine Positionsvariable $\Theta$ der Detektoranordnung (9) berücksichtigt, mit $\Theta$: Winkelposition der Detektoranordnung (9) bezüglich der Goniometerachse (8), gemessen gegenüber einer ersten Referenzebene (RE1), die die Goniometerachse (8) enthält, insbesondere wobei die erste Referenzebene (RE1) horizontal ist.

10. Verfahren nach Anspruch 9, **dadurch gekennzeichnet, dass** die erste Referenzebene (RE1) horizontal ist, und dass die Steuerung des Kompensationsmotors (20) so erfolgt, dass dieser ein Drehmoment $M_{KM}$ erzeugt, welches einen Beitrag B1 näherungsweise proportional zu $\cos\Theta$ hat.

11. Verfahren nach einem der Ansprüche 8 bis 10, **dadurch gekennzeichnet, dass** die Steuereinrichtung (28) für die Steuerung des Kompensationsmotors (20) eine Positionsvariable $\Gamma$ der Detektoranordnung (9) berücksichtigt, mit $\Gamma$: Winkelposition der Detektoranordnung (9) bezüglich einer koplanaren Achse (53), gemessen gegenüber einer zweiten Referenzebene (RE2), die die koplanare Achse (53) enthält, insbesondere wobei die zweite Referenzebene (RE2) senkrecht zur Goniometerachse (8) verläuft, und wobei die koplanare Achse (53) senkrecht zur Goniometerachse (8) verläuft und die Gonimeterachse (8) an der Probenposition (17) schneidet.

**12.** Verfahren nach Anspruch 11, **dadurch gekennzeichnet, dass** die Steuerung des Kompensationsmotors (20) so erfolgt, dass dieser ein Drehmoment $M_{KM}$ erzeugt, welches einen Beitrag B2 näherungsweise proportional zu cosΓ hat.

**13.** Verfahren nach einem der Ansprüche 8 bis 12, **dadurch gekennzeichnet, dass** die Steuereinrichtung (28) für die Steuerung des Kompensationsmotors (20) eine Positionsvariable AB der Detektoranordnung (9) berücksichtigt, mit AB: Abstand der Detektoranordnung (9) von der Probenposition (17).

**14.** Verfahren nach Anspruch 13, **dadurch gekennzeichnet, dass** die Steuerung des Kompensationsmotors (20) so erfolgt, dass dieser ein Drehmoment $M_{KM}$ erzeugt, welches einen Beitrag B3 näherungsweise proportional zu AB hat.

**15.** Verfahren nach einem der Ansprüche 8 bis 14, **dadurch gekennzeichnet, dass** in der Steuereinrichtung (28) eine Wertetabelle, eine Wertematrix, eine Kennlinie oder ein Kennlinienfeld (60) für ein vom Kompensationsmotor (20) einzustellendes Moment $M_{KM}$ oder einen an den Kompensationsmotor (20) anzulegenden Wert einer Steuergröße in Abhängigkeit von einer oder mehreren Positionsvariablen der Detektoranordnung (9) hinterlegt ist,
und dass die Steuereinrichtung (28) während des Betriebs der Röntgenvorrichtung (1) die Wertetabelle, die Wertematrix, die Kennlinie oder das Kennlinienfeld (60) anwendet oder ausliest, um das einzustellende Moment $M_{KM}$ oder den Wert der Steuergröße zu bestimmen.

**Claims**

**1.** An x-ray apparatus (1) comprising

- a goniometer (7) with a detector circle (16) which is rotatable about a goniometer axis (8), in particular wherein the goniometer axis (8) extends in the horizontal direction,
- an actuator (18), which is coupled to the detector circle (16), for the motor-driven rotation of the detector circle (16),
- a source arrangement (2) which comprises an x-ray source (3),
- a detector arrangement (9) which is fastened to the detector circle (16), wherein the detector arrangement (9) comprises an x-ray detector (10),
- a sample position (17) for a sample to be examined, wherein the source arrangement (2) and the detector arrangement (9) are aligned with the sample position (17), in particular wherein the sample position (17) lies on the goniometer axis (8),
- and a compensation apparatus (19), by means of which a torque in respect of the goniometer axis (8) acting on the detector circle (16) that is produced by the weight of the detector arrangement (9) is at least substantially compensated,

**characterized in that**
the compensation apparatus (19) comprises

- a compensation motor (20), which likewise is coupled to the detector circle (16), for applying a torque in respect of the goniometer axis (8) to the detector circle (16) and
- a control device (28) for the compensation motor (20), said control device being embodied to actuate the compensation motor (20) depending on a current position of the detector arrangement (9) in such a way that the torque applied by the compensation motor (20) is at least substantially equal and opposite to a torque in respect of the goniometer axis (8) that is produced by the weight of the detector circle (16) including the detector arrangement (9).

**2.** The x-ray apparatus (1) as claimed in the preceding claim, **characterized in that** the detector arrangement (9) is fastened to the detector circle (16) in a manner pivotable about a coplanar axis (53), wherein the coplanar axis (53) extends perpendicularly to the goniometer axis (8) and intersects the goniometer axis (8) at the sample position (17).

**3.** The x-ray apparatus (1) as claimed in claim 2, **characterized in that** a front cantilever part (51) is fixed to the detector circle (16), a rear cantilever part (52) is mounted on the front cantilever part (51) in a manner pivotable about the coplanar axis (53), the detector arrangement (9) is fastened to the rear cantilever part (52) and provision is made of a first further actuator (54) for motor-driven rotation of the rear cantilever part (52).

4. The x-ray apparatus (1) as claimed in any one of the preceding claims, **characterized in that** the detector arrangement (9) is fastened to the detector circle (16) by way of a guide system (12) such that the detector arrangement (9) can be displaced by means of the guide system (12) toward the sample position (17) or away from the sample position (17), in particular be displaced perpendicularly to the goniometer axis (8), along a displacement axis (13) which intersects the sample position (17) and said detector arrangement can be locked at various displacement positions.

5. The x-ray apparatus (1) as claimed in any one of the preceding claims, **characterized in that** the source arrangement (2) is fastened to a source circle (6) of the goniometer (7), said source circle likewise being rotatable about the goniometer axis (8), and the actuator (18) or a second further actuator is coupled to the source circle (6) for motor-driven rotation of the source circle (6).

6. The x-ray apparatus (1) as claimed in any one of the preceding claims, **characterized in that** the compensation apparatus (19) is embodied without counterweights (21).

7. The x-ray apparatus (1) as claimed in any one of the preceding claims, **characterized in that** the compensation motor (20) is embodied as a DC motor, in particular as a brushless DC motor.

8. A method for operating an x-ray apparatus (1), in particular an x-ray apparatus (1) as claimed in any one of the preceding claims, **characterized in that** the x-ray apparatus (1) comprises

- a goniometer (7) with a detector circle (16) which is rotatable about a goniometer axis (8), in particular wherein the goniometer axis (8) extends in the horizontal direction,
- an actuator (18), which is coupled to the detector circle (16), for the motor-driven rotation of the detector circle (16),
- a source arrangement (2) which comprises an x-ray source (3),
- a detector arrangement (9) which is fastened to the detector circle (16), wherein the detector arrangement (9) comprises an x-ray detector (10),
- a sample position (17) for a sample to be examined, wherein the source arrangement (2) and the detector arrangement (9) are aligned with the sample position (17), in particular wherein the sample position (17) lies on the goniometer axis (8),
- a compensation motor (20), which likewise is coupled to the detector circle (16), for applying a torque in respect of the goniometer axis (8) to the detector circle (16) and
- a control device (28) for the compensation motor (20), wherein the control device (28) actuates the compensation motor (20) depending on a current position of the detector arrangement (9) in such a way that the torque applied by the compensation motor (20) is at least substantially equal and opposite to a torque in respect of the goniometer axis (8) that is produced by the weight of the detector circle (16) including the detector arrangement (9).

9. The method as claimed in claim 8, **characterized in that** the control device (28) takes account of a position variable $\Theta$ of the detector arrangement (9) for controlling the compensation motor (20), where $\Theta$: angular position of the detector arrangement (9) with respect to the goniometer axis (8), measured in relation to a first reference plane (RE1) which contains the goniometer axis (8), in particular wherein the first reference plane (RE1) is horizontal.

10. The method as claimed in claim 9, **characterized in that** the first reference plane (RE1) is horizontal and the compensation motor (20) is controlled in such a way that the latter produces a torque $M_{KM}$ which has a contribution B1 approximately proportional to $\cos \Theta$.

11. The method as claimed in any one of claims 8 to 10, **characterized in that** the control device (28) takes account of a position variable $\Gamma$ of the detector arrangement (9) for controlling the compensation motor (20), where $\Gamma$: angular position of the detector arrangement (9) with respect to a coplanar axis (53), measured in relation to a second reference plane (RE2) which contains the coplanar axis (53), in particular wherein the second reference plane (RE2) extends perpendicularly to the goniometer axis (8), and wherein the coplanar axis (53) extends perpendicularly to the goniometer axis (8) and intersects the goniometer axis (8) at the sample position (17).

12. The method as claimed in claim 11, **characterized in that** the compensation motor (20) is controlled in such a way that the latter produces a torque $M_{KM}$ which has a contribution B2 approximately proportional to $\cos \Gamma$.

**13.** The method as claimed in any one of claims 8 to 12, **characterized in that** the control device (28) takes account of a position variable AB of the detector arrangement (9) for controlling the compensation motor (20), where AB: distance of the detector arrangement (9) from the sample position (17).

**14.** The method as claimed in claim 13, **characterized in that** the compensation motor (20) is controlled in such a way that the latter produces a torque $M_{KM}$ which has a contribution B3 approximately proportional to AB.

**15.** The method as claimed in any one of claims 8 to 14, **characterized in that** a value table, a value matrix, a characteristic or characteristic field (60) for a torque $M_{KM}$ that is to be set by the compensation motor (20) or for a value of a controlled variable that is to be applied to the compensation motor (20) is stored in the control device (28) depending on one or more position variables of the detector arrangement (9), and that the control device (28) applies or reads out the value table, the value matrix, the characteristic or the characteristic field (60) during the operation of the x-ray apparatus (1) in order to determine the torque $M_{KM}$ to be set or the value of the controlled variable.

**Revendications**

**1.** Dispositif à rayons X (1), comprenant

- un goniomètre (7) avec un circuit détecteur (16) qui peut tourner autour d'un axe de goniomètre (8), en particulier l'axe de goniomètre (8) s'étendant horizontalement,
- un servomoteur (18) qui est couplé au circuit détecteur (16), pour la rotation motorisée du circuit détecteur (16),
- un ensemble source (2) qui comprend une source de rayons X (3),
- un ensemble détecteur (9) qui est fixé au circuit détecteur (16), l'ensemble détecteur (9) comprenant un détecteur de rayons X (10),
- une position d'échantillon (17) pour un échantillon à analyser, l'ensemble source (2) et l'ensemble détecteur (9) étant orientés vers la position d'échantillon (17), en particulier la position d'échantillon (17) étant située sur l'axe de goniomètre (8),
- et un dispositif de compensation (19) avec lequel un couple produit par le poids de l'ensemble détecteur (9) par rapport à l'axe de goniomètre (8) sur le circuit détecteur (16) est au moins sensiblement compensé,

**caractérisé en ce
que** le dispositif de compensation (19) comprend

- un moteur de compensation (20), qui est également couplé au circuit détecteur (16), pour appliquer un couple par rapport à l'axe de goniomètre (8) sur le circuit détecteur (16), et
- un dispositif de commande (28) pour le moteur de compensation (20), qui est conçu pour commander le moteur de compensation (20) en fonction d'une position instantanée de l'ensemble détecteur (9) de telle sorte que le couple appliqué par le moteur de compensation (20) soit au moins sensiblement opposé à un couple produit par le poids du circuit détecteur (16) y compris l'ensemble détecteur (9) par rapport à l'axe de goniomètre (8).

**2.** Dispositif à rayons X (1) selon l'une des revendications précédentes, **caractérisé en ce que** l'ensemble détecteur (9) est fixé pivotant autour d'un axe coplanaire (53) sur le circuit détecteur (16), l'axe coplanaire (53) étant perpendiculaire à l'axe de goniomètre (8) et coupant l'axe de goniomètre (8) à la position d'échantillon (17).

**3.** Dispositif à rayons X (1) selon la revendication 2, **caractérisé en ce qu'**une partie en porte-à-faux avant (51) est fixée au circuit détecteur (16), qu'une partie en porte-à-faux arrière (52) est montée sur la partie en porte-à-faux avant (51) de façon à pouvoir pivoter autour de l'axe coplanaire (53), que l'ensemble détecteur (9) est fixé à la partie en porte-à-faux arrière (52) et qu'un servomoteur supplémentaire (54) est prévu pour la rotation motorisée de la partie en porte-à-faux arrière (52).

**4.** Dispositif à rayons X (1) selon l'une des revendications précédentes, **caractérisé en ce que** l'ensemble détecteur (9) est fixé au circuit détecteur (16) par l'intermédiaire d'un système de guidage (12), de sorte que l'ensemble détecteur (9) peut être déplacé au moyen du système de guidage (12) le long d'un axe de déplacement (13) qui coupe la position d'échantillon (17), vers ou depuis la position d'échantillon (17), en particulier peut être déplacé perpendiculairement à l'axe de goniomètre (8) et être arrêté à différentes positions de déplacement.

5.  Dispositif à rayons X (1) selon l'une des revendications précédentes, **caractérisé en ce que** l'ensemble source (2) est fixé sur un circuit source (6) du goniomètre (7) qui peut également tourner autour de l'axe de goniomètre (8), et que le servomoteur (18) ou un deuxième servomoteur supplémentaire est couplé au circuit source (6) pour la rotation motorisée du circuit source (6).

6.  Dispositif à rayons X (1) selon l'une des revendications précédentes, **caractérisé en ce que** le dispositif de compensation (19) est réalisé sans contrepoids (21).

7.  Dispositif à rayons X (1) selon l'une des revendications précédentes, **caractérisé en ce que** le moteur de compensation (20) est réalisé sous la forme d'un moteur à courant continu, en particulier d'un moteur à courant continu sans balais.

8.  Procédé de fonctionnement d'un dispositif à rayons X (1), en particulier d'un dispositif à rayons X (1) selon l'une des revendications précédentes, lequel dispositif à rayons X (1) comprend

    - un goniomètre (7) avec un circuit détecteur (16) qui peut tourner autour d'un axe de goniomètre (8), en particulier l'axe de goniomètre (8) s'étendant horizontalement,
    - un servomoteur (18) qui est couplé au circuit détecteur (16), pour la rotation motorisée du circuit détecteur (16),
    - un ensemble source (2) qui comprend une source de rayons X (3),
    - un ensemble détecteur (9) qui est fixé au circuit détecteur (16), l'ensemble détecteur (9) comprenant un détecteur de rayons X (10),
    - une position d'échantillon (17) pour un échantillon à analyser, l'ensemble source (2) et l'ensemble détecteur (9) étant orientés vers la position d'échantillon (17), en particulier la position d'échantillon (17) étant située sur l'axe de goniomètre (8),
    - un dispositif de compensation (19) qui est également couplé au circuit détecteur (16), pour appliquer un couple par rapport à l'axe de goniomètre (8) sur le circuit détecteur (16) et
    - un dispositif de commande (28) pour le moteur de compensation (20), lequel dispositif de commande (28) commande le moteur de compensation (20) en fonction d'une position instantanée de l'ensemble détecteur (9) de telle sorte que le couple appliqué par le moteur de compensation (20) soit au moins sensiblement opposé à un couple produit par le poids du circuit détecteur (16) y compris l'ensemble détecteur (9) par rapport à l'axe de goniomètre (8).

9.  Procédé selon la revendication 8, **caractérisé en ce que** le dispositif de commande (28) tient compte, pour la commande du moteur de compensation (20), d'une variable de position $\Theta$ de l'ensemble détecteur (9), avec $\Theta$ : position angulaire de l'ensemble détecteur (9) par rapport à l'axe de goniomètre (8), mesurée par rapport à un premier plan de référence (RE1) qui contient l'axe de goniomètre (8), en particulier le premier plan de référence (RE1) étant horizontal.

10. Procédé selon la revendication 9, caractérisé en cc que le premier plan de référence (RE1) est horizontal et que le moteur de compensation (20) est commandé de telle sorte qu'il produit un couple $M_{KM}$ qui a une contribution B1 approximativement proportionnelle à cos $\Theta$.

11. Procédé selon l'une des revendications 8 à 10, **caractérisé en ce que** le dispositif de commande (28) tient compte, pour la commande du moteur de compensation (20). d'une variable de position $\Gamma$ de l'ensemble détecteur (9), avec $\Gamma$ : position angulaire de l'ensemble détecteur (9) par rapport à un axe coplanaire (53), mesurée par rapport à un deuxième plan de référence (RE2) contenant l'axe coplanaire (53), en particulier le deuxième plan de référence (RE2) étant perpendiculaire à l'axe de goniomètre (8), et l'axe coplanaire (53) s'étendant perpendiculairement à l'axe de goniomètre (8) et coupant l'axe de goniomètre (8) à la position d'échantillon (17).

12. Procédé selon la revendication 11, **caractérisé en ce que** le moteur de compensation (20) est commandé de telle sorte qu'il produit un couple $M_{KM}$ qui a une contribution B2 approximativement proportionnelle à cos $\Gamma$.

13. Procédé selon l'une des revendications 8 à 12, **caractérisé en ce que** le dispositif de commande (28) tient compte, pour la commande du moteur de compensation (20), d'une variable de position AB de l'ensemble détecteur (9), avec AB : distance entre l'ensemble détecteur (9) et la position d'échantillon (17).

14. Procédé selon la revendication 13, **caractérisé en ce que** le moteur de compensation (20) est commandé de telle sorte qu'il produit un couple $M_{KM}$ qui a une contribution B3 approximativement proportionnelle à AB.

**15.** Procédé selon l'une des revendications 8 à 14, **caractérisé en ce qu'**un tableau de valeurs, une matrice de valeurs, une courbe caractéristique ou un champ de courbes caractéristiques (60) pour un couple $M_{KM}$ à régler par le moteur de compensation (20) ou une valeur d'une grandeur de commande à appliquer au moteur de compensation (20) en fonction d'une ou plusieurs variables de position de l'ensemble détecteur (9) est enregistré(e) dans le dispositif de commande (28), et que le dispositif de commande (28) utilise ou lit le tableau de valeurs, la matrice de valeurs, la courbe caractéristique ou le champ de courbes caractéristiques (60) pendant le fonctionnement du dispositif à rayons X (1) afin de déterminer le couple $M_{KM}$ à régler ou la valeur de la grandeur de commande.

Fig. 1

Fig. 2

Fig. 3

Fig. 4

EP 3 336 526 B1

Fig. 5

**IN DER BESCHREIBUNG AUFGEFÜHRTE DOKUMENTE**

**In der Beschreibung aufgeführte Patentdokumente**

- EP 1621873 B1
- EP 1462795 B1

- JP 2001221752 A